## Europäisches Patentamt

(19) **European Patent Office**

**Office européen des brevets**

(11) Veröffentlichungsnummer: **0 330 827 B1**

# (12) EUROPÄISCHE PATENTSCHRIFT

(45) Veröffentlichungstag der Patentschrift:
13.03.91 Patentblatt 91/11

(51) Int. Cl.⁵: **B60H 3/06, B60H 1/00, B60S 1/56**

(21) Anmeldenummer: 89101053.0

(22) Anmeldetag: 21.01.89

(54) Schadstoffverminderung im Kraftfahrzeug-Innenraum.

(30) Priorität: 27.02.88 DE 3806307

(43) Veröffentlichungstag der Anmeldung:
06.09.89 Patentblatt 89/36

(45) Bekanntmachung des Hinweises auf die
Patenterteilung:
13.03.91 Patentblatt 91/11

(84) Benannte Vertragsstaaten:
DE FR GB IT

(56) Entgegenhaltungen:
EP-A- 0 042 287

(56) Entgegenhaltungen:
DE-A- 3 446 082
PATENT ABSTRACTS OF JAPAN, Band 8, Nr.
94 (M-293)[1581], 28. April 1984; JP-A-59 8518
(NIPPON DENSO K.K.) 17-01-1984
PATENT ABSTRACTS OF JAPAN, Band 10, Nr.
40 (M-454)[2097], 18. Februar 1986; JP-A-60
193 715 (NAIRUSU BUHIN K.K.) 02-10-1985

(73) Patentinhaber: ROBERT BOSCH GMBH
Postfach 10 60 50
W-7000 Stuttgart 10 (DE)

(72) Erfinder: Hettich, Gerhard, Dr. Dipl.-Phys.
Martin-Renz-Strasse 8
W-8501 Dietenhofen (DE)

## Beschreibung

### Stand der Technik

Die Erfindung geht aus von einem Verfahren zur Schadstoffverminderung im Kraftfahrzeug-Innenraum nach der Gattung des Anspruchs 1 und von einer Vorrichtung zur Durchführung des Verfahrens nach der Gattung des Anspruchs 7.

Aus der DE-MA- 34 22 778 ist es bekannt, einen Kraftfahrzeugventilator in Abhängigkeit von dem von einem Schadstoffsensor abgegebenen Signfal aus- bzw. einzuschalten. Aus der DE-MA- 35 26 462 ist es weiterhin bekannt, in Abhängigkeit eines von einem Schadstoffsensor abgegebenen Signals die Frischluftzufuhr in den Fahrzeug-Innenraum von außen zu unterbinden, indem insbesondere die Eintrittsöffnungen für Frischluft geschlossen werden.

Bei den bekannten Verfahren und Vorrichtungen ist ein spezieller Sensor erforderlich, der zwischen schädlichen und gefahrlosen Stoffen unterscheidet.

Eine hohe Schadstoffbelastung tritt auch auf, wenn flüchtige Zusätze im Scheibenwaschwasser vorhanden sind, die nach einer Betätigung der Scheibenwaschanlage und/oder der Scheinwerfer-Reinigungsanlage durch die Lüftungskanäle in den Innenraum eindringen.

### Vorteile der Erfindung

Das erfindungsgemäße Verfahren weist den Vorteil auf, daß die Frischluftzufuhr in den Kraftfahrzeug-Innenraum beim Betätigen der Waschanlage unterbrochen wird und nach einer vorgebbaren Zeit wieder freigegeben wird. Mit dem erfindungsgemäßen Verfahren wird in besonders einfacher Weise eine durch Zusätze im Waschwasser verursachte Belastung des Innenraums verhindert.

Das erfindungsgemäße Verfahren ist besonders einfach dadurch zu realisieren, daß ein in Zuluftkanälen angeordnetes Gebläse beim Betätigen der Scheibenwaschanlage abgeschaltet und nach der vorgebbaren Zeit wieder eingeschaltet wird. Bei entsprechend ausgerüsteten Fahrzeugen ist weiterhin vorgesehen, daß Frischluftklappen geschlossen werden und eine vorhandene Klimaanlage auf Umluftbetrieb umgeschaltet wird.

In einer vorteilhaften Weiterbildung des erfindungsgemäßen Verfahrens wird die vorgebbare Zeit in Abhängigkeit von der Fahrgeschwindigkeit festgelegt.

Die erfindungsgemäße Vorrichtung zur Durchführung des Verfahrens weist den Vorteil einer einfachen Realisierung auf, indem einer Ansteuerung eines pumpenmotors der Waschanlage ein Signal entnommen wird, das einem Zeitglied zugeführt ist, das den Gebläsemotor und/oder die Luftklappen ansteuert.

Die erfindungsgemäße Vorrichtung ist besonders kostengünstig realisierbar, da bereits vorhandene Signale weiterverwendet werden.

Weitere Einzelheiten und Verbesserungen des erfindungsgemäßen Verfahrens und der zugehörigen Vorrichtung ergeben sich aus weiteren Unteransprüchen in Verbindung mit der folgenden Beschreibung.

### Zeichnung

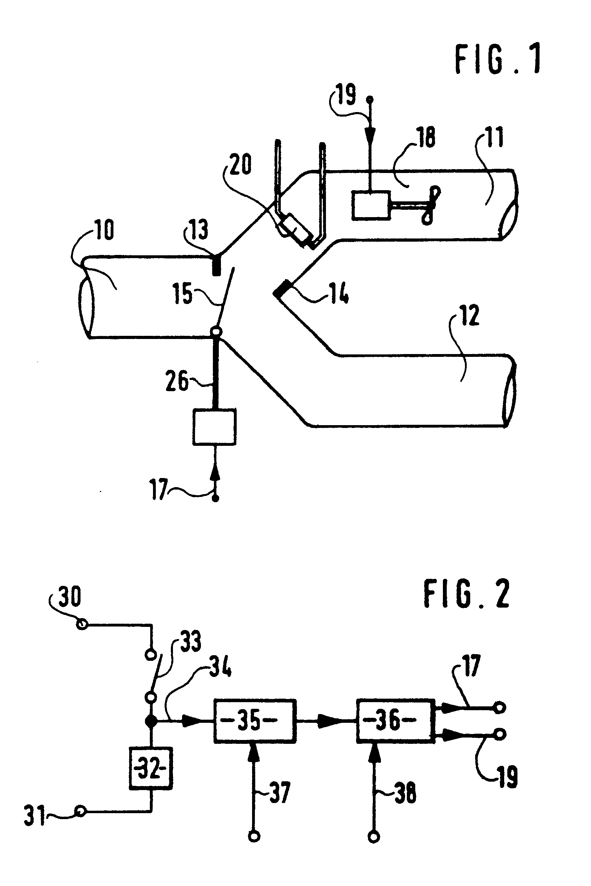

Figur 1 zeigt ein Gebläse und eine Luftklappe, die in Lüftungskanälen angeordnet sind und Figur 2 zeigt ein Blockschaltbild einer Vorrichtung zur Durchführung des Verfahrens.

### Beschreibung des Ausführungsbeispiels

Figur 1 zeigt einen Frischluftkanal 10 sowie einen Zuluft- und Umluftkanal 11, 12. Die Luftströmung in den Kanälen 10 - 12 ist durch eine zwischen zwei Anschlägen 13, 14 von einem Antrieb 16 bewegbare Luftklappe 15 beeinflußbar. Der Antrieb 16 ist über eine Steuerleitung 17 hinsichtlich der Drehrichtung und-/oder der Position steuerbar. Im Zuluftkanal 11 sind ein Gebläse 18, das über eine Leitung 19 steuerbar ist, und ein Wärmetauscher 20 angeordnet.

In Figur 2 sind zwei Stromversorgungsanschlüsse 30, 31 gezeigt, zwischen denen ein Pumpenmotor 32 einer Scheibenwaschanlage geschaltet ist, die mit einem Schalter 33 in Betrieb gesetzt wird. Ein Abgriff 34 führt zu einem Zeitglied 35, das mit einer Steuerschaltung 36 verbunden ist. Zum Zeitglied 35 und zur Steuerschaltung 36 führen jeweils Steuerleitungen 37, 38.

Das erfindungsgemäße Verfahren wird anhand der in den beiden Figuren gezeigten Vorrichtungen näher erläutert:

Der Pumpenmotor 32 ist Bestandteil einer nicht näher beschriebenen Scheibenwaschanlage. Nach Schließen des Schalters 33 wird Reinifungsflüssigkeit aus einem Vorratsbehälter abgepumpt und auf die zu reinigende Scheibe gesprüht. Die Reinigungsflüssigkeit enthält hauptsächlich Wasser, dem Zusätze beigemischt werden zur Verstärkung der Reinigungswirkung und bei Bedarf zur Erniedrigung des Gefrierpunkts. Viele dieser Zusätze sind gesundheitsschädlich, wenn sie eingeatmet werden.

Beim Einschalten des pumpenmotors 32 wird das Zeitglied 35 aktiviert. Die Steuerschaltung 36 gibt über die Steuerleitung 17 an den Luftklappenantrieb 16 und über die Steuerleitung 19 an das Gebläse 18 jeweils ein Signal ab. Die Luftklappe 15 wird auf den ersten Anschlag 13 hin bewegt und verschließt den im Außenbereich des Kraftfahrzeugs mündenden Frischluftkanal 10. Die im Außenbereich des Fahrzeugs auftretenden Schadstoffe nach Betätigen der Scheibenwaschanlage können somit durch den Frischluftkanal 10 nicht mehr ins Fahrzeuginnere gelangen. Das Gebläse 18 saugt nur die Luft über den Umluftkanal 12 an. Im Luftstrom ist vorzugsweise ein Wärmetauscher 20 einer Heizungsanlage und gegebenenfalls ein Wärmetauscher einer Kühlanlage angeordnet. Das Gebläse und der Wärmetauscher werden so geregelt, daß sich während der Umschaltung die Innenraumtemperatur nicht verändert. Nach einer vorgebbaren Zeit wird der vor Betätigen der Waschanlage bestehende Zustand wieder hergestellt.

Das Zeitglied 35 ist in einer einfacheren Ausführung auf eine feste Zeit eingestellt, die im Bereich von 1 bis 2 Minuten liegen kann. Vorzugsweise wird die vorgebbare Zeit in Abhängigkeit von der Fahrgeschwindigkeit des Kraftfahrzeugs verändert. Bei höheren Fahrgeschwindigkeiten wird die vorgegebene Zeit reduziert. Die Information über die Fahrgeschwindigkeit gelangt über die Leitung 37 in das Zeitglied 35.

Anstelle der Betätigung des Gebläses 18 und des Luftklappenantriebs 16 über die Steuerschaltung 36 und über die Steuerleitung 17 bzw. über die Steuerleitung 19 in Abhängigkeit von den an der Leitung 38 der Steuerschaltung 36 liegenden Signalen ist es auch möglich, die beiden Steuerleitungen 17, 19 zum Regelgerät der Heiz- und/oder Klimaanlage zu führen und das Gebläse 18 und den Luftklappenantrieb 16 über eine Ausgangsstufe in diesem Regelgerät zu steuern.

## Ansprüche

1. Verfahren zur Schadstoffverminderung im Innenraum eines Kraftfahrzeugs, das eine Scheiben- und/oder Scheinwerfer-Waschanlage aufweist, dadurch gekennzeichnet, daß die Frischluftzufuhr in den Innenraum beim Betätigen der Anlage unterbrochen und nach einer vorgebbaren Zeit wieder freigegeben wird.

2. Verfahren nach Anspruch 1, dadurch gekennzeichnet, daß ein in Zuluftkanälen (10, 11) angeordnetes Gebläse (18) beim Betätigen der Anlage abgeschaltet und nach einer vorgebbaren Zeit wieder eingeschaltet wird.

3. Verfahren nach Anspruch 1, dadurch gekennzeichnet, daß eine in Lüftungskanälen (10, 11, 12) angeordnete Luftklappe (15) bei Betätigung der Anlage geschlossen und nach einer vorgebbaren Zeit wieder auf Frischluftbetrieb geschaltet wird.

4. Verfahren nach Anspruch 3, dadurch gekennzeichnet, daß die Luftklappe (15) während der vorgebbaren Zeit auf Umluftbetrieb geschaltet wird.

5. Verfahren nach Anspruch 1, dadurch gekennzeichnet, daß die vorgebbare Zeit abhängig ist von der Fahrgeschwindigkeit des Kraftfahrzeugs.

6. Verfahren nach Anspruch 1, dadurch gekennzeichnet, daß in die Heiz- und/oder Klimaanlage des Kraftfahrzeugs eingegriffen wird, derart, daß die Innenraumtemperatur den vorgegebenen Sollwert möglichst exakt einhält.

7. Vorrichtung zur Durchführung des Verfahrens nach Anspruch 1, dadurch gekennzeichnet, daß ein am Schalter (33) eines Pumpenmotors (32) der Waschanlage abnehmbares Signal, das die Betätigung der Waschanlage anzeigt, einem Zeitglied (35) zugeführt ist, daß über eine Steuerschaltung (36) einen Antrieb (16) steuert, derart, daß eine Luftklappe (15) für die vorgegebene Zeit die Frischluftzufuhr sperrt.

## Claims

1. Method for reducing noxious substances in the passenger compartment of a motor vehicle which has a windscreen washing system and/or headlight washing system, characterized in that the fresh air supply into the passenger compartment is interrupted when the system is activated and enabled again after a predeterminable time.

2. Method according to Claim 1, characterized in that a blower (18) arranged in air inlet channels (10, 11) is switched off when the system is activated and switched on again after a predeterminable time.

3. Method according to Claim 1, characterized in that an air flap (15) arranged in ventilation channels (10, 11, 12) is closed when the system is activated and switched to fresh air mode again after a predeterminable time.

4. Method according to Claim 3, characterized in that the air flap (15) is switched to recirculating mode during the predeterminable time.

5. Method according to Claim 1, characterized in that the predeterminable time is dependent on the travelling speed of the motor vehicle.

6. Method according to Claim 1, characterized in that intervention occurs in the heating system and/or air-conditioning system of the motor vehicle in such a way that the temperature of the passenger compartment conforms to the predetermined reference value as exactly as possible.

7. Device for carrying out the method according to Claim 1, characterized in that a signal which can be tapped off at the switch (33) of a pump motor (32) of the washing system and which indicates the activation of the washing system is fed to a timing element (35) which controls a drive (16) via a control circuit (36) in such a way that an air flap (15) blocks the fresh air supply for the predetermined time.

## Revendications

1. Procédé de réduction des polluants dans l'habitacle d'un véhicule automobile, qui présente une installation de lavage des vitres et/ou des phares de route, caractérisé en ce que l'amenée d'air neuf dans l'habitable est interrompue lors de l'actionnement de l'installation et reprise une fois écoulée une durée pouvant être prédéterminée.

2. Procédé selon la revendication 1, caractérisé en ce qu'un ventilateur (18) disposé dans des canaux d'amenée d'air (10, 11) est mis hors service lors de l'actionnement de l'installation et remis en service une fois écoulée une durée pouvant être prédéterminée.

3. Procédé selon la revendication 1, caractérisé en ce qu'un volet d'air (15) disposé dans des canaux d'aération (10, 11, 12) est fermé lors de l'actionnement de l'installation et remis en position de passage d'air neuf une fois écoulée une durée pouvant être prédéterminée.

4. Procédé selon la revendication 3, caractérisé en ce que le volet d'air (15) est connecté en recirculation d'air pendant la durée pouvant être prédéterminée.

5. Procédé selon la revendication 1, caractérisé en ce que la durée pouvant être prédéterminée est fonction de la vitesse de roulage du véhicule automobile.

6. Procédé selon la revendication 1, caractérisé en ce qu'une commande est exercée dans l'installation de chauffage et/ou de climatisation du véhicule automobile, de telle façon que la température de habitable suive autant que possible la valeur de consigne prédéterminée.

7. Dispositif pour la réalisation du procédé selon la revendication 1, caractérisé en ce qu'un signal qui peut être prélevé sur l'interrupteur (33) d'une motopompe (32) de l'installation de lavage et qui indique la mise en service de l'installation de lavage est amené à un organe temporisateur (35) qui commande un entraînement (16), par l'intermédiaire d'un circuit de commande (36), de telle façon qu'un volet d'air (15) obture l'amenée d'air neuf pour une durée prédéterminée.

FIG . 1

FIG . 2